# EUROPEAN PATENT APPLICATION

(11) **EP 4 106 361 A1**
(43) Date of publication of application: **21.12.2022**
(21) Application number: 21180446.3
(22) Date of filing: 18.06.2021
(51) Int. Cl.: H04W 4/44, H04W 28/02

(54) **V2X COMMUNICATION APPARATUS AND ITS DCC OPERATION METHOD**

(71) Applicant: DENSO CORPORATION, Kariya-city, Aichi-pref, 448-8661 (JP)
(72) Inventor: LEINMÜLLER, Tim, 85386 Eching (DE); MITTAL, Prachi, 85386 Eching (DE)
(74) Representative: Betten & Resch

(57) **Abstract**

A V2X communication apparatus for transmitting a V2X message over a wireless network is provided. The apparatus performs decentralized congestion control (DCC). The apparatus comprises a communication unit for transmitting and receiving V2X messages, a checking unit for checking the current congestion state of the wireless network per channel, a management layer entity for controlling the communication unit (and the layers within as described below) and the checking unit that is generating a first message generation ruleset based on at least the checked current congestion state. The apparatus also comprises a message generation unit for generating V2X messages to be transmitted by the communication unit, in accordance with the generated first message generation ruleset.

The management layer entity is configured to obtain the network status of the wireless network that is predicted for a point or period of time in the future, obtain, based on the obtained network status, a requirements profile of each of the one or more applications, and for the one or more services for the point or period of time in the future, and generate a second message generation ruleset based on the obtained one or more requirements profiles in addition to the checked current congestion state.

All message generation units are configured to generate V2X messages to be transmitted by the communication unit, in accordance with the generated second message generation ruleset.

## Description

### Technical field

The present invention relates to a decentralized congestion control (DCC) operation in a V2X communication.

### Background

In cooperative intelligent transport systems (C-ITS), vehicles exchange information with other road users and road infrastructure (vehicle-to-everything (V2X) communication).

The other road users may be other vehicles in their vicinity (V2V: Vehicle to Vehicle) or pedestrians (V2P: Vehicle to Pedestrian). Other communication partners include roadside infrastructure / devices (V21: Vehicle to Infrastructure), or backend servers in the Internet (V2N: Vehicle to Network). Each participant in the V2X communication comprises a network node.

Except for V2N (and communication through the Network, such as V2N2V - Vehicle to Network to Vehicle) which typically uses a cellular network, the V2X communication is usually a direct and unmanaged communication, e.g. in a Vehicular Ad hoc NETwork (VANET).

Since radio spectrum resources for V2X are limited, Decentralized Congestion Control (DCC) is defined to avoid channel overloading (keeping the C-ITS operational) and increase resource utilization efficiency. DCC requires that V2X transmitters of the respective nodes control e.g. the transmission rate of their messages based on a channel load.

### Technical Problem

The conventional DCC architecture considers only current information such as congestion state (measured e.g. by channel busy ratio (CBR)). No consideration is made as to upcoming changes in a network status (network state). Furthermore, no consideration is made as to requirements of applications running in a node, which may be affected by upcoming changes in the network status (in particular deterioration of network environment, but also considerable improvement of network environment enabling for e.g. better application performance).

With the present DCC system, in high network load scenarios, it is not possible to deal with upcoming changes in application or service requirements due to future road traffic events such as vehicles merging lanes, resulting in potential non-availability or significantly decreased performance of the application or service in question.

### Solution to Problem

To deal with the above problem, according to an aspect of the present invention, a V2X communication apparatus is provided for transmitting a V2X message over a wireless network and implementing DCC. The V2X communication apparatus comprises a communication unit for transmitting and receiving V2X messages, a checking unit for checking the current (local - i.e. in the apparatus' communication range) congestion state of the wireless network per channel, a management layer entity for controlling the communication unit (and the layers within as described below) and the checking unit that is generating a first message generation ruleset based on at least the checked current congestion state. The apparatus also comprises of an application layer entity on which one or more applications can run, and a facility layer entity on which one or more services can run. Some of the applications and each of the services contain a message generation unit for generating V2X messages to be transmitted by the communication unit, in accordance with the generated message generation ruleset.

The management layer entity is configured to obtain the network status of the wireless network that is predicted for a point or period of time in the future, obtain, based on the obtained network status, a requirements profile of each of the one or more applications, and for the one or more services for the point or period of time in the future, and generate a second message generation ruleset based on the obtained one or more requirements profiles in addition to the checked current congestion state.

All message generation units are configured to generate V2X messages to be transmitted by the communication unit, in accordance with the generated second message generation ruleset.

Preferably, the network status prediction is performed in a periodical manner. In this case, the intervals will be longer than the checking of the current congestion state. As a result, there are points of time when only the checking takes place, generating the first message generation rule, and points of time when both the checking and prediction take place, generating the second message generation rule.

According to another aspect of the present invention, a DCC operation method of a V2X communication apparatus for transmitting a V2X message over a wireless network, comprising an application layer entity on which one or more applications and a facilities layer entity on which one or more services can run is provided.

The method comprises checking a current congestion state of the wireless network per channel, obtaining a network status of the wireless network that is predicted for a point or period of time in the future, obtaining, based on the obtained network status, a requirements profile of each of the one or more applications and each of the one or more services for the point or period of time in the future, and generating message generation ruleset based on the obtained one or more requirements profiles and the checked current congestion state.

The message generation ruleset thus generated is used for generating V2X messages to be transmitted.

This method can be considered as a method for operating a management layer entity in a V2X messaging network node.

### Advantageous Effects of Invention

According to the present invention, DCC performance (application performance), and thus the overall C-ITS performance is improved by generating message generation rulesets based on a predicted network status of the wireless network for a point of time or for a period of time in the future

### Brief Description of Drawings

FIGS. 1A and 1B illustrate an exemplary architecture of an intelligent transport system (ITS) station.
FIG. 2 illustrates a decentralized congestion control (DCC) architecture that is used in the ITS system of FIG.1 and applicable to the present invention.
FIG. 3 illustrates a detailed configuration shown in FIG. 2.
FIG. 4 illustrates a first embodiment according to the present invention.
FIG. 5 illustrates a second embodiment according to the present invention.
FIGS. 6A and 6B illustrate a third embodiment according to the present invention.
FIGS. 7A and 7B illustrates a fourth embodiment according to the present invention.

### Preferred Embodiments

The present invention relates to a DCC operation method in a V2X communication apparatus. The present invention also relates to a V2X communication apparatus.

Hereinafter, preferred embodiments of the present invention will be described in detail with reference to the drawings.

The architectures/apparatuses/entities (i.e. functional units) that will be explained below may be implemented by hardware, firmware, software or a combination of them.

The V2X communication apparatus is configured to be installed in a vehicle, a roadside unit (RSU), carried by a pedestrian, or another traffic participant. The V2X communication apparatus forms part of a (cooperative) intelligent transport system (C-ITS) and constitutes an ITS station. In one embodiment, the C-ITS has an architecture defined in ETSI EN 302 665, which is incorporated herein by reference.

The V2X communication apparatus performs communication in a communication network (e.g. VANET) and constitutes a network node. The V2X communication apparatus ("ego" node) performs communication with V2X communication apparatus(es) of neighboring nodes (e.g. vehicle(s) or roadside units (RSUs)). The V2X communication apparatuses form a (C-)ITS.

The communication schemes available may include but are not limited to an ITS-G5/DSRC (dedicated short-range communication) wireless communication technology based on the IEEE 802.11 OCB mode (also referred to as IEEE 802.11p), and the 2G/3G/4G/LTE/5G wireless cellular communication technology (including C-V2X / LTE-V2X).

The V2X communication apparatus is equipped with components (not shown) required for such a wireless communication such as memory, antenna/receiver/transmitter (i.e. communication unit as a whole), processor configured to control the memory and the communication unit (which may be referred to as "controller" or "manager"), and sensors.

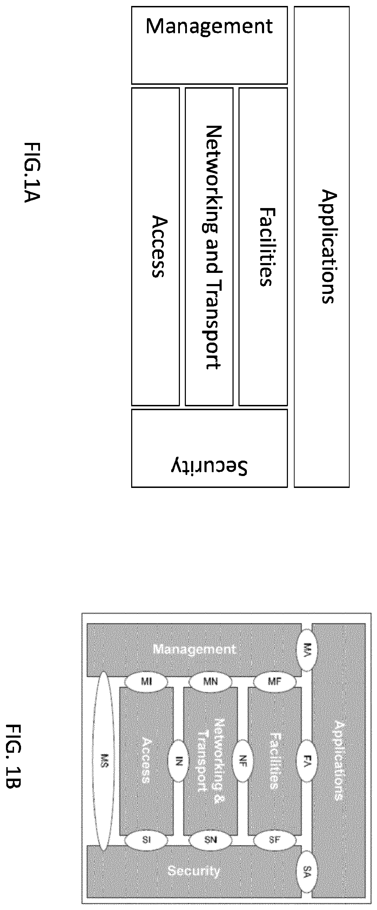

FIGS. 1A and 1B illustrate an exemplary architecture of the ITS station (V2X communication apparatus).

This architecture corresponds to the one defined in ETSI EN 302 665 (which is incorporated herein by reference) and includes a management layer entity, and four hierarchical layer entities, i.e. an access layer entity, a network & transport layer entity, facilities layer entity, and an application layer entity.

The architecture may additionally comprise a security layer entity. Since the security layer entity is not relevant to the functionality of the present invention, the explanation thereof is omitted.

In the following, the term "layer entity" is also referred to as "layer" for the simplicity of explanation.

When messages (V2X messages) are communicated between (V2X communication apparatuses of) nodes (e.g. vehicles or between a vehicle and a roadside infrastructure), the message to be transmitted is transferred down through each layer of the hierarchy in the vehicle and the message to be received is transferred up through each layer of the hierarchy in the vehicle. Each layer will be described below.

As shown in FIG. 1B, the transfer of information or a request between adjacent layers is performed via an interface between the layers (e.g. interface FA between the application layer and the facilities layer).

The application layer implements and supports various (C-)ITS applications which provide (C-)ITS related services/functions such as road safety and traffic efficiency. Lane merging application is one example.

The facilities layer provides support for effectively implementing multiple (C-)ITS applications defined in the application layer. For example, the facilities layer may perform application support, information support, and session/communication support. The facilities layer may contain functionality from the OSI application layer, the OSI presentation layer (e.g. ASN.1 encoding and decoding, and encryption) and the OSI session layer (e.g. inter-host communication) of the OSI model. The facilities layer includes services used by/provided to multiple applications, e.g. the Cooperative Awareness Basic Service, that is responsible for creating, sending, and receiving Cooperative Awareness Messages (CAMs), and the Decentralized Environmental Notification Service that is responsible for creating, sending, and receiving decentralized environmental notification messages (DENM), e.g. for road hazard warning applications (RHW). Further examples for facilities layer services (some of them under development in standardization) are the Cooperative Perception Service (CPS), responsible for creating, sending, and receiving the Cooperative Perception Message (CPM), and the Maneuver Coordination Service (MCS), responsible for creating, sending, and receiving the Maneuver Coordination Message (MCM).

The network & transport layer configures a network for vehicular communication between homogeneous/heterogeneous networks by using various transport protocols and network protocols.

For example, the network/transport layer may provide routing with the internet access using an internet protocol such as TCP/UDP+IPv6. Alternatively, the network & transport layer may configure a vehicle ad-hoc network using a combination of transport protocol, such as the basic transport protocol (BTP) and a geographical position-based routing protocol such as the GeoNetworking (GNW) protocol.

The network & transport layer may contain functionality corresponding to the OSI network layer and the OSI transport layer of the OSI model.

The access layer transmits, via a physical channel, messages/data received from the higher layer (i.e. network & transport layer). For example, the access layer may support data communication ITS-G5/DSRC wireless communication technology based on the IEEE 802.11 OCB mode (also referred to as IEEE 802.11p), or the 2G/3G/4G/LTE/5G wireless cellular communication technology (including C-V2X / LTE-V2X).

The access layer may contain functionality corresponding to the OSI physical layer and the OSI data link layer of the OSI model.

The management layer (management plane) performs control over the hierarchical layers that work independently, which will be described in detail below in connection with DCC (decentralized congestion control) functionality. Furthermore, the management layer contains the ITS station communication system configuration in form of a Management Information Base (MIB). This configuration includes but is not limited to the parameter confirmation of the GNW layer, as well as the parameter configuration of the DCC subsystem.

In a limited channel environment in which multiple network nodes of a network share a common channel, a congestion control mechanism controls, by each network node, its amount of channel use in order to increase reception probability of transmitted messages.

In a DCC architecture, there is no central network node or central processing unit (such as an access point or a base station) that is configured to perform a congestion control over multiple network nodes. Each ITS stations in the C-ITS system performs a channel congestion control by using a DCC mechanism (thus the name, Decentralized Congestion Control).

An exemplary DCC architecture is defined in ETSI TS 103 175 V1.1.1 (2015-06) and ETSI TS 103 141 V0.1.6 (2021-03). These standards are incorporated herein by reference.

The aim with DCC is to adjust transmission parameters of the ITS station given the current radio channel condition in order to maximize the probability of a successful reception at intended receiver(s).

DCC attempts to provide equal access to the channel resources (per channel) among neighboring ITS stations (equal access considers number of messages as well as their priority). The channel resources allocated by DCC to the ITS station should be distributed between multiple applications according to their needs thereof.

Messages in an ITS station are assigned or created with different priorities. Usually, the message generation entities in application and facility layer in an ITS station should avoid creating more messages than communication resources available. In case the ITS station fails to do so, DCC (on access layer) considers the priority classes of different messages and discards messages (or limits their transmission power) according to the respective channel usage allocation for their priority class, if the channel occupation of the ITS stations exceeds allotted resources (without the ITS station applications' explicit consent). This functionality is also referred to as gatekeeper functionality.

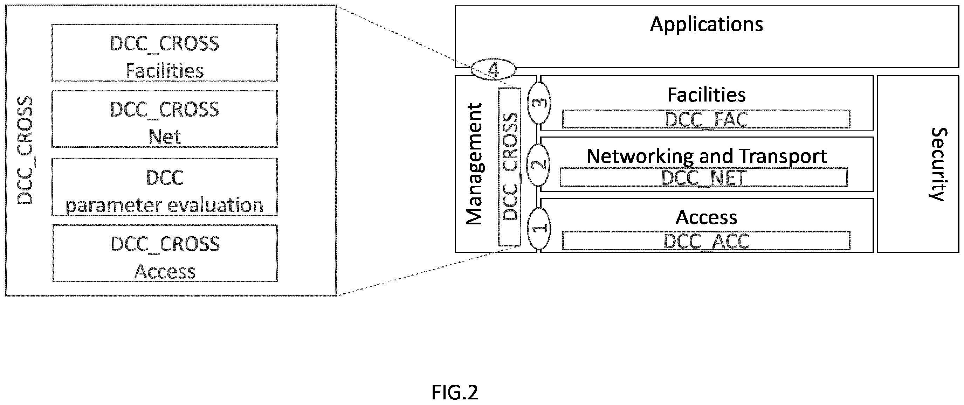

FIG. 2 illustrates an exemplary DCC architecture to which the present invention is applicable.

This architecture corresponds to the one defined in ETSI TS 103 175 V1.1.1 (2015-06) and ETSI TS 103 141 V0.1.6 (2021-03) (which are incorporated herein by reference), and includes a DCC facilities layer entity (DCC_FAC) located in the facilities layer, a DCC network layer entity (DCC_NET) located in the network & transport layer, a DCC access layer entity (DCC_ACC) located in the access layer, and a DCC management entity (DCC_CROSS) located in the management layer. Entities (components) may be connected through respective DCC interfaces (interfaces 1 to 4). Please note that conventionally the interface 4 is not considered and not yet specified.

DCC_FAC may include at least one of the following DCC functions:
Controlling a load generated by messages (e.g., CAM, DENM, other messages) on the radio channel(s): This load is controlled by an indication provided to a basic facilities service or an application that generates the message.

### Potential triggering of channel switching

Mapping of a message priority set by the basic facilities service or an application to a traffic class field of the message

In particular, DCC_FAC (together with the corresponding functionality DCC_CROSS_Facilities in DCC_CROSS) may control the load generated by each application or service at the time of generating the message such as CAM. To do so, DCC_FAC may consider available channel resources of the ITS-station from DCC_CROSS and message generation requirements from the services / the applications. For example, DCC_FAC may acquire an available CBR per radio channel from DCC_CROSS, acquire a message size and a message interval from each service or application, and calculate a proposed minimum interval that is transferred to DCC_CROSS_Facilities, which in turn provides it to the respective services or applications.

DCC_NET may include at least one of the following DCC functions:
Storing CBR values received from other ITS stations in direct radio communication range and evaluating them to forward the global CBR (usually determined as the maximum CBR experienced by any of the ITS stations in direct communication range, including the own station's CBR) to the DCC_CROSS
Disseminating a local DCC parameter to a neighboring ITS station by inserting a value into a GN header

DCC_ACC may include at least one of the following DCC functions:
CBR evaluation: Deriving a local CBR from a measured channel load (CL), for each of the radio channels used by the ITS station

DCC prioritization: Selecting a DCC queue where to deliver the message according to a traffic class (TC) indicated in the message. If using ITS-G5/DSRC, a TC corresponding to a highest EDCA (Enhanced Distributed Channel Access - according to IEEE 802.11e) access class is mapped to a DCC queue having a highest priority and dequeued by a DCC flow control first.

DCC queue: Temporarily storing a transmit (Tx) message before transmission. When the radio channel is busy, the message is queued. If a queuing time exceeds a message lifetime, the message is dropped.

DCC power control: Determining transmit (Tx) power associated with the message based on information provided by DCC_CROSS

DCC flow control: Performing traffic shaping based on parameters provided by DCC_CROSS_Access

DCC gatekeeper: combining DCC prioritization, DCC queues, DCC flow and DCC power control to enforce channel utilization limits provided by DCC

As shown in FIG.2, DCC_CROSS, for a cross-layer operation of the DCC mechanism, may include at least one of the following DCC functions:
DCC parameter evaluation: Computing internal DCC parameters indicating the available channel resources based on CBR values collected by a CBR evaluation function (local CBR) and received by DCC_NET (highest global CBR value). Providing the ITS stations global DCC TX parameters to DDC_NET.

DCC_CROSS_Acess: Determining DCC flow control and DCC power control parameters for each used radio channel based on the internal DCC parameters computed by the DCC parameter evaluation function and providing the determined parameters to the DCC_ACC entity

DCC_CROSS_Net: Returning to DCC_NET the available resources per radio channel.

DCC_CROSS_Facilities: Using the internal DCC parameters from the DCC parameter evaluation function to determine the available channel resource limit for the registered applications and the facilities services. This value is either provided to the DCC_FAC entity, or to the applications and facilities services directly.

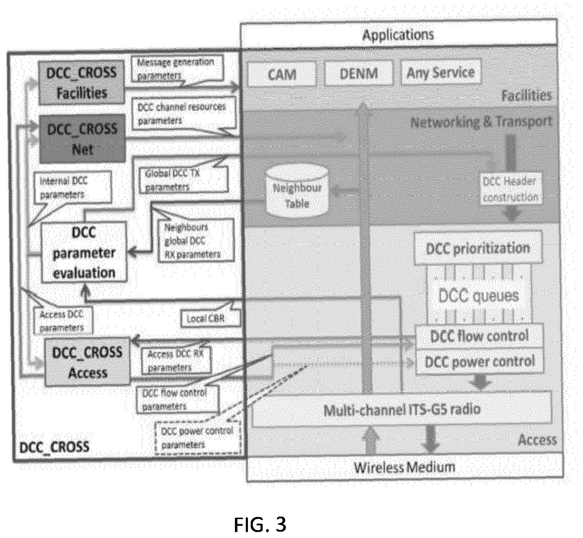

FIG. 3 illustrates an overview of the DCC in an ITS station defined in ETSI TS 103 175 V1.1.1 (2015-06). The right part illustrates the functions in the data layers interacting with DCC_CROSS of the management layer.

As will be explained detail, the present invention provides an improvement to the DCC operation that uses the configuration shown in FIG.3.

In the following, an exemplary operation for the DCC of the architecture shown in FIG.3 will be described.

For DCC, the access layer checks the congestion state (congestion status) of each of the channels used in the ITS station. The congestion state of the channel (i.e. channel load) is typically expressed in terms of Channel Busy Ratio (CBR) or Channel Busy Time (CBT). The CBR is defined as a ratio between the time the channel is sensed as busy and the total observation time (e.g. 100 ms).

The CBR is collected and processed by the DCC parameter evaluation entity of the management layer. The CBR represents a CBR locally perceived by the ego ITS station for each individual radio channel and is referred to as a local CBR.

The ITS station (ego station) receives a CBR from any of neighboring ITS stations within a radio range. Such CBR information is collected and stored in a neighbor table of the networking & transport layer, together with the other information on neighboring ITS stations that is used for the geo-routing functionality.

For DCC, the management layer receives information the networking & transport layer, and the access layer, and processes the received information in each DCC entity to provide a respective control signal to each of the facilities layer, the networking & transport layer, and the access layer.

More specifically, the DCC parameter evaluation entity acquires the global CBR from the networking & transport layer, acquires the local CBR from the access layer, and generates internal DCC parameters and global DCC transmit (Tx) parameters. The generated internal DCC parameters are delivered to the respective entities, i.e. DCC_CROSS_Facilities, DCC_CROSS_Net, and DCC_CROSS Access entities in the management layer. The global DCC transmit parameters are delivered to the networking & transport layer.

The global CBR represents a maximum value (for a selected channel) of the ego ITS station's local CBR and the global CBRs of neighboring ITS stations stored in the neighbor table of the networking & transport layer.

The DCC_CROSS_Facilities entity generates, based on the internal DCC parameter from the DCC parameter evaluation entity, message generation parameters (e.g. message generation rate, message transmission period, message transmission interval), and delivers the generated message generation parameters to the applications and services in the facilities layer.

The DCC_CROSS_Net entity generates, based on the internal DCC parameter from the DCC parameter evaluation entity, DCC channel resource parameters, and delivers the generated DCC channel resource parameters to the networking & transport layer.

The DCC_CROSS_Access entity generates, based on the internal DCC parameter from the DCC parameter evaluation entity, access DCC parameters, and DCC flow control parameters, and optionally DCC power control parameters. DCC_CROSS_Access then delivers the generated DCC flow control parameters to the access layer. To support the GeoNetworking functionality, DCC_CROSS_Access receives the time when the last message was forwarded to the radio interface from DCC_ACC and provides it to the DCC_CROSS_Net entity.

For the DCC, a service in the facilities layer generates a message (e.g. CAM), based on the message generation parameters (e.g. message generation rate, message transmission period, message transmission interval) from the DCC_CROSS_Facilities entity of the management layer.

In an example, when the local CBR is relatively low or lower than a predetermined threshold (i.e. channel usage is low), the message transmission interval may define that the service in the facilities layer generates a message more frequently (i.e. a resource is allocated to a large amount of packets), assuming that the other message generation parameters of the service (e.g. changes in kinematics of a vehicle) support the more frequent generation. On the other hand, when the local CBR is relatively high or higher than the predetermined threshold (i.e. channel usage is high), the message transmission interval may define that the service in the facilities layer generates a message less frequently (i.e. a resource is allocated to only a small amount of packets).

A more specific example of operation, which is performed in the DCC_CROSS layer (e.g. in the DCC_CROSS_Access entity)_ of the management layer, is illustrated in ETSI TS 103 175 V1.1.1 (Annex C) using a state-based reactive DCC method (defined in ETSI TS 102 687 V1.2.1 (2018-4), which is incorporated herein by reference).

The state-based reactive DCC method utilizes a state machine and selects, based on the CBR, one of the multiple states (e.g. five states), in which each state is associated with a corresponding packet transmission rate (or idle time). Idle time represents time interval between the end of transmission of a first burst and start of transmission of the next burst by the ego ITS station on a given radio channel.

The following table 1 from ETSI TS 103 175 V1.1.1 (Annex C) shows an example of mapping of states to CBR values, packet transmission rates and idle times.

**Table 1**

| **State** | **Channel load** | **Packet transmission rate** | **Idle time** |
|---|---|---|---|
| Relaxed | < 30 % | 10 Hz | 100 ms |
| Active 1 | 30 % to 39 % | 5 Hz | 200 ms |
| Active 2 | 40 % to 49 % | 2,5 Hz | 400 ms |
| Active 3 | 50 % to 60 % | 2 Hz | 500 ms |
| Restrictive | > 60 % | 1 Hz | 1 000 ms |

The state machine may be in a 'relaxed' state when the CBR is lowest, in a 'restrictive' state when the CBR is equal to or more than a specific value, or active" state 1 to "active" state 3 that are defined between the relaxed state and the restrictive state. As the CBR increases (i.e. as the channel load increases), the state of the state machine is changed from the relaxed state, the active state 1, the active state 2, the active state 3 to the restrictive state.

In summary, DCC_CROSS of the management layer performs parameter evaluation based on information from "real-time" (current) local CBR via DCC_ACC and "real-time" (current) global CBR via DCC_NET, and then provides feedback/instructions to each DCC entity (or directly to other entities) within the facilities layer, the network & transport layer and the access layer.

In particular, DCC_CROSS provides feedback/instructions concerning V2X message generation, through its DCC_CROSS_Facilities, to DCC_FAC of the facilities layer or directly to the services and applications.

As such, the ITS station performing the conventional DCC scheme addresses avoiding overloading of the channel by adjusting a message generation rule (per channel) such as message generation period or interval based on the collected "real-time" (current) CBR.

For example, the standard ETSI TS 103 141 V0.1.6 (2021-03) only considers current network status (e.g. CBR), statistics of current messages (e.g. message duration (size) and interval), and current service and application requirements (e.g. message duration (size) and interval).

The present invention provides an improved DCC architecture by considering upcoming changes in network status and application requirements, as well as a possibility to convey service and application requirements in a more granular manner

In other words, the present invention provides notifications about a predicted utilization and availability of the communication resources (which can also be referred to as predictive Quality of Service - p-QoS) of a channel or the network and a predicted application and services behaviour to adjust a DCC operation in advance.

For this purpose, the management layer is provided at its DCC_CROSS_Facilities with a communication manager configured to communicate with the facilities and the application layer entity.

Furthermore, the communication manager is configured to obtain predicted/expected information on upcoming changes in the status of the network (e.g. VANET with neighboring V2X communication apparatus(es), or cellular network). Such information may be prediction data about the available communication resources/network performance of the network.

For example, in a scenario in which a vehicle is moving and communicating via a certain number of bits (e.g. 20Mbps) as a minimum UL (uplink) data rate requirement, the roadside ITS station may inform, as prediction data, the vehicle that on the driving path the UL data rate is predicted to drop below the requirement in a certain period of time (e.g. 20 seconds) and that state continues for a period of time (e.g. 30 seconds).

In another scenario, a vehicle is moving on a highway on-ramp where CBR is low (e.g. 10%), planning to merge in the highway. A preceding vehicle on the ramp is informing about the V2X channel being congested on the highway (e.g. CBR 70%). Therefore, the vehicle with the merging intention can configure its message generation services in advance to allow for the merging operation (e.g. reducing the CAM rate).

The communication manager will obtain prediction data concerning network status obtained from another entity (which is referred to in the specification as "network prediction entity").

The network prediction entity may be located within the vehicle (ego) itself (either as one of the facilities in the ITS stack or outside the ITS stack) or outside the vehicle. In the latter, the network prediction entity may be located within another ITS station (e.g. roadside ITS station), within a mobile edge, within a mobile core network, within an OEM backed, or within a cloud.

The prediction data may be in the form of a higher layer management message or in the form of a lower layer signaling (e.g. 3GPP protocols).

Higher layer: the management layer entity will process received prediction data and forward it to the communication manager
Lower layer: a corresponding entity in the layer will pass the received prediction data over the management layer to the communication manager

### First Embodiment

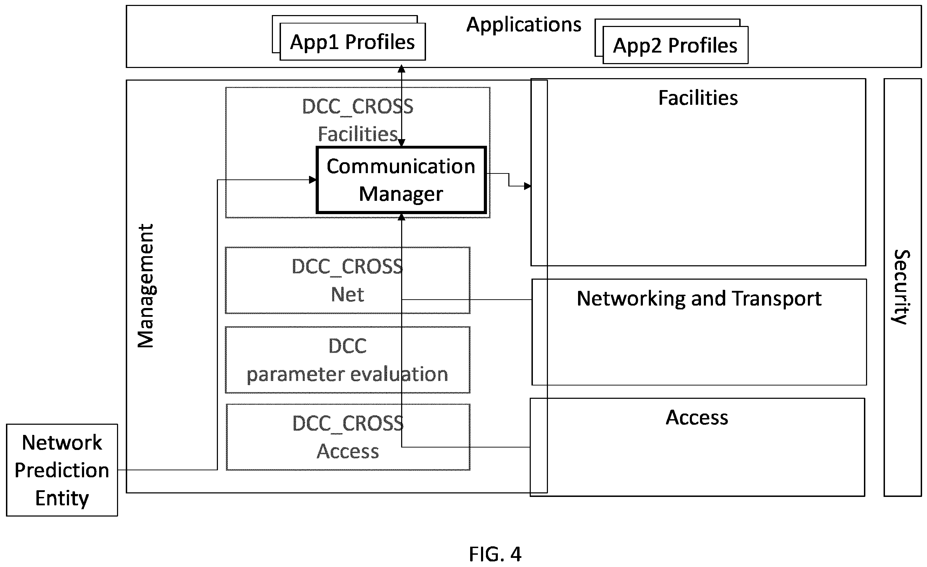

FIG. 4 illustrates a first embodiment of the DCC operation method using a V2X communication apparatus. The V2X communication apparatus is located within the vehicle.

The communication manager is located within DCC_CROSS facilities.

Like the conventional DCC scheme, the communication manager (located in DCC_CROSS_Facilities) may obtain internal DCC parameters from the DCC parameter evaluation entity that has acquired the global CBR from the networking & transport layer and acquired the local CBR from the access layer (for the sake of simplification, this configuration is omitted in FIG. 4).

The access layer (preferably together with the networking & transport layer) can be considered as an example of the claimed checking unit for checking a current congestion state of the wireless network per channel. It is noted that global CBR is optional and only applicable if GeoNetworking is used.

The vehicle is provided with a network prediction entity outside the ITS architecture (i.e. outside the ITS stack). Via an in-vehicle network, the network prediction entity obtains a speed, a location, and a direction of the vehicle from sensors or GPS and further gets access to map data (stored in the memory). Using these pieces of data, the network prediction entity estimates the environment that the vehicle will be situated in (e.g. lane merging or tunnel) and that may affect the network environment in the future. The network prediction entity also obtains network usage statistics from non-ITS applications in the vehicle, specifically when using cellular communication managed by a base station. Thereby, the network prediction entity can predict upcoming changes in the network status of the wireless network and provide the prediction to the communication manager.

Preferably, the network prediction entity performs a prediction in a periodic manner (e.g. every 10 seconds). Alternatively, the network prediction can be triggered on demand, when a new application is about to start.

The network prediction entity may additionally be informed of road traffic information in order to predict when a traffic congestion that may affect the network status is expected.

The communication manager is able to communicate with the application layer via an interface between the management layer and the application layer.

The communication manager (either once during startup, or preferably periodically) obtains, from each application in the application layer, an application requirements profile, such as communication requirements, i.e. conditions that each application is currently required and will be required to meet in order to run (properly) currently or at a point of time and for a period of time in the future. The communication requirements may include message/application priority (i.e. prioritizing a message over another message, prioritizing an application over another application), message generation rate (message repetition rate), bandwidth (e.g. 8Mbps is currently required), and/or average message size.

For the purpose of obtaining an application requirements profile of each application that will be required in the future, the applications (or alternatively the application layer on behalf of the applications) are required to hold a "current" requirements profile (of course each application knows its current requirements profile), and the communication manager informs the application layer of current and the predicted network status received from the network prediction entity.

In response, each application of the application layer adjusts, based on the current and predicted network status, its application requirements profile, and informs the communication manager of the adjusted application requirements profile.

In other words, each application informs, in response to receiving a current and apredicted network status from the communication manager, the communication manager of changes (over time) in its corresponding requirements profile. Alternatively, the application layer entity may inform the communication manager of changes in requirements profiles of multiple applications.

Broadly, the application requirements profile may indicate one of at least two profiles of different operation (performance) levels.

For example, the requirements profile may indicate one of three operations profiles, i.e. a normal operation profile, an upgraded operation profile, and a downgraded operation profile.

The following table 2 shows an example in which that among two applications App 1 and App 2, App 1 informs, in response to receiving a prediction of deteriorated network status, the communication manager that App 1 will use a reduced bandwidth. App 2 informs the communication manager that its current bandwidth is still sufficient under the predicted deterioration of network status. Note that, the application requirements could also be described in a number of messages generated per second, as described above.

**Table 2**

| | **Requirement profile (current)** | **Requirement profile (after receipt of prediction of network status)** |
|---|---|---|
| App 1 | Full performance:3Mbps | Low performance : 1 Mbps |
| App 2 | Full performance : 1Mbps | Full performance : 1Mbps |

One or more applications that do not need to change its requirements profile may skip informing the communication manager of the maintenance of the requirements profile.

The application layer entity may monitor (i.e. have an overarching view on) the requirements of all the applications running using a common channel, and may determine, upon receipt of a prediction of network status from the communication manager of the management layer, how a requirements profile of each of these applications using the common channel is to be adjusted, and inform the result of the communication manager.

The application layer entity may further monitor when a new application is going to start and/or the running application is expected to stop. Such information may be used to determine, upon receipt of a prediction of network status for a point or period of time in the future, how a requirements profile of each of these applications that will be running for the point or period of time is to be adjusted.

For example, for an application that will end until the time (e.g. 20 seconds later) for which the prediction of network status has been made is unnecessary to consider for the determination. On the other hand, for an application that will have started until the time for which the prediction of network status has been made can be taken into consideration for the determination.

In summary, according to the first embodiment, the communication manager informs the application(s) in the application layer of a "current" network status or a network status predicted for a point or period of time in the future, and obtains, from the application layer, suitable/adjusted requirements profiles for the respective application(s) for the "current" operation or for the future point of time or period of time.

As such, the communication manager in the DCC_CROSS Facilities entity obtains, in addition to a "current" network status (e.g. in terms of current CBR), adjusted requirements profiles of the respective application(s) for a point or period of time in the future.

Based on these pieces of information, the communication manager in the DCC_CROSS_Facilities entity generates message generation parameters (e.g. message generation rate, message transmission period, message transmission interval), and delivers the generated message generation parameters to the facilities layer.

These message generation parameters can be considered as a message generation "ruleset".

The facilities layer generates a message (e.g. CAM), taking into account the message generation parameters (e.g. message generation rate, message transmission period, message transmission interval) from the communication manager in the DCC_CROSS_Facilities entity of the management layer.

Referring to the table 1 shown above, in the conventional DCC scheme only current channel load is taken into consideration to determine a state of the state machine, and therefore message generation parameters associated with the state.

On the other hand, according to the first embodiment of the present invention, since a network status is predicted for a point or period of time in the future, and based on the prediction adjusted application requirements profiles of the applications are obtained, message generation to be performed by the facilities layer can be matched in advance to the expected requirements profiles of the applications in the application layer (in other words, message generation can be adjusted at a current time in preparation of the expected requirements profiles of the applications in the application layer), thereby resulting in an improved performance of all ITS stations and therefore the overall ITS.

For example, suppose a lane merging application, increased CAM rate and MCM (Maneuver Coordination Messages) are to be exchanged in preparation and during merging maneuver.

Lane merging often happens in dense traffic scenarios resulting in high communication network load (thus DCC wants to reduce each ITS station's communication).

Without the communication manager, DCC_FAC of the facilities layer will assign/recommend low repetition rates for CAM and MCM. As a result, merging maneuver is discarded or not supported by the communication (which means for example that it would have to be carried out at walking speed using on-board sensors only).

On the other hand, in accordance with the first embodiment, the communication manager informs the lane merging application that a reduced communication resource will be necessary (e.g. in 20 seconds). The communication manager then obtains a resource estimation from the lane merge application.

As such, the communication manager knows in advance a suitable communication resource for the lane merge application for the time of actual lane merging maneuver, and generates dedicated message generation parameters for different services (e.g. 2 CAMs with 300byte/second for 20s, 1 CPM with 400byte/second) for the facilities layer.

### Second Embodiment

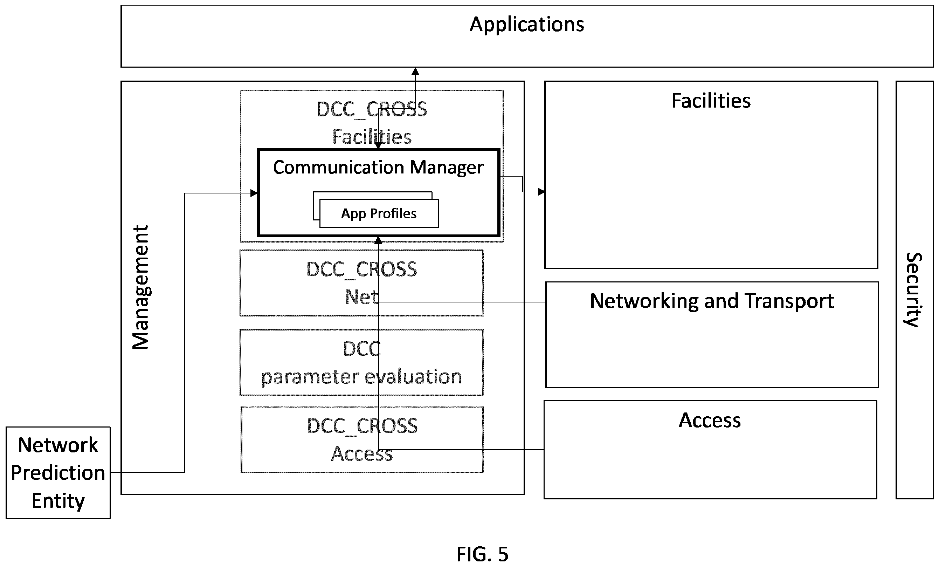

FIG. 5 illustrates a second embodiment of the DCC operation method using a V2X communication apparatus. The V2X communication apparatus is located within the vehicle.

The communication manager is located within DCC_CROSS facilities.

In the same manner as the first embodiment, the vehicle is provided with a network prediction entity outside the ITS architecture (i.e. outside the ITS stack) to provide a predicted network status to the communication manager.

However, in contrast to the first embodiment, the communication manager holds a predetermined set of application requirements profiles for each application.

Broadly, a requirements profile may indicate one of at least two profiles of different operation (performance) levels. For example, the requirements profile may indicate one of three operations profiles, i.e. a normal operation profile, an upgraded operation profile, and a downgraded operation profile.

In the same manner as the first embodiment, the network prediction entity can predict upcoming changes in the network status of the wireless network and provide the prediction to the communication manager.

Based on the predicted network status, the communication manager selects a requirements profile for each application intended for a point or period of time.

The communication manager informs each application or the application layer entity.

The application layer or the applications inform(s) the communication manager about (expected) applications starts and expected duration of the application operation. The communication manager takes this information into account when selecting and informing application requirements profiles to the applications.

As such, the communication manager in the DCC_CROSS Facilities entity determines, in addition to obtaining a "current" network status (e.g. in terms of current CBR), adjusted requirements profiles of the respective application(s) for a point or period of time in the future.

Based on these pieces of information, the communication manager in the DCC_CROSS_Facilities entity generates message generation parameters (e.g. message generation rate, message transmission period, message transmission interval), and delivers the generated message generation parameters to the facilities layer.

According to the second embodiment of the present invention, since a network status is predicted for a point or period of time in the future, and based on the prediction, and based on the expected application run times, application requirements profiles are assigned to the applications

Similar to the first embodiment, message generation to be performed by the facilities layer can be matched in advance to the expected requirements profiles of the applications in the application layer (in other words, message generation can be adjusted at a current time in preparation of the expected requirements profiles of the applications in the application layer), thereby resulting in an improved performance of the ITS station.

### Third Embodiment

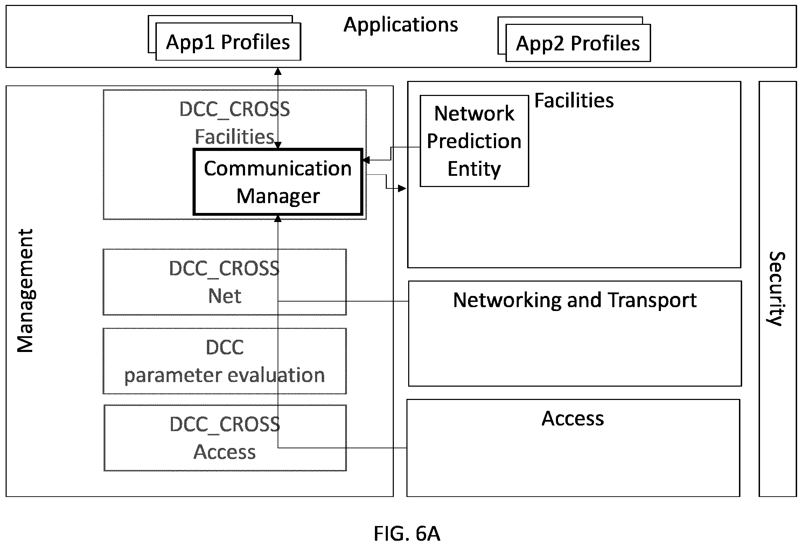

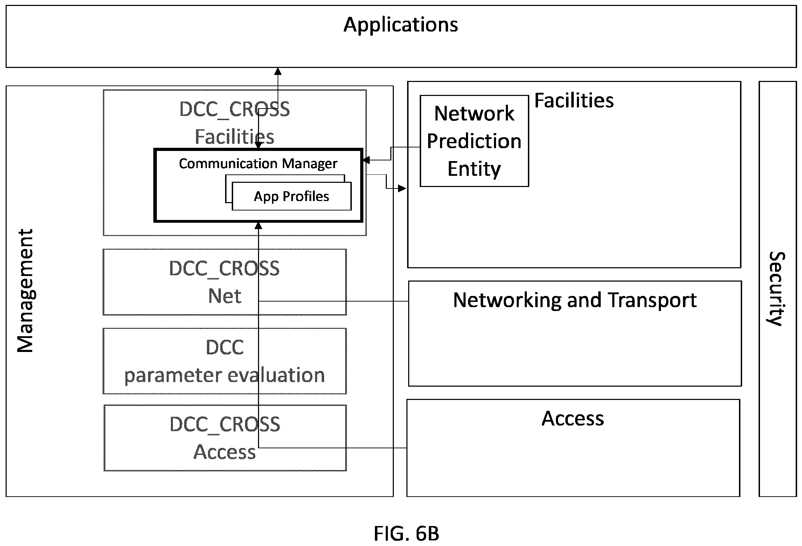

FIGS. 6A and 6B illustrate a third embodiment of the DCC operation method using a V2X communication apparatus. The V2X communication apparatus is located within the vehicle.

According to the third embodiment, the network prediction entity is within the vehicle but located as one of the facilities in the ITS stack. The network prediction entity determines upcoming changes in the network status in the same manner as the first embodiment and provides the result to the communication manager to the DCC_CROSS Facilities entity.

As for the remaining configuration and operation, the explanation made with respect to the first embodiment (see FIG. 6A) or the second embodiment (see FIG 6B) apply.

Current applications of UE(s) (ego vehicle or neighboring vehicles) may additionally be used to perform the network prediction. Knowing about such current applications of UE(s) can help predict the network usage. For example, a group of vehicles jointly doing lane merging results in a certain contribution to the total network load.

This configuration is advantageous over the first embodiment in which the network prediction entity is located outside the ITS stack in that can implement and realize an additional active exchange of network predictions with other vehicles. Furthermore, it can base network predictions on

### Fourth Embodiment

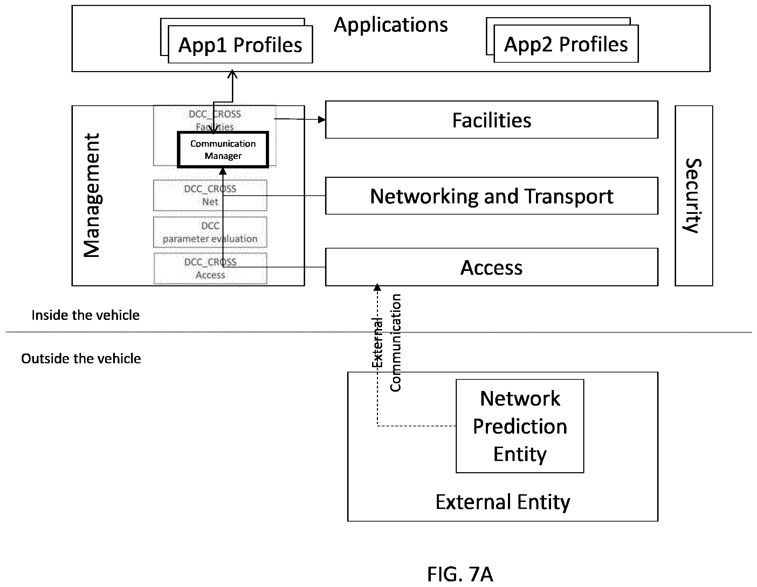

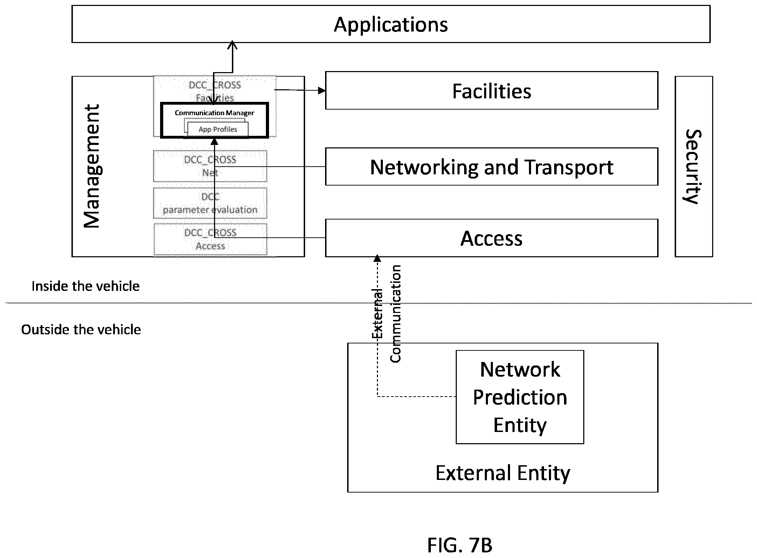

FIGS. 7A and 7B illustrate a fourth embodiment of the DCC operation method using a V2X communication apparatus. The V2X communication apparatus is located within the vehicle.

According to the fourth embodiment, the network prediction entity is located outside the vehicle (ego) and within an external entity. The external entity may be another ITS station (e.g. roadside ITS station), a mobile edge, a mobile core network, an OEM backed, or a cloud.

As such, the fourth embodiment concerns a system comprising a vehicle equipped with a V2X communication apparatus, and an entity located outside the vehicle, and a DCC operation method performed by the system.

The network prediction entity can monitor a speed, a location, and a direction of the vehicle (ego) via various sensors (e.g. image sensor located at the roadside for imaging vehicle moving on the road) and further gets access to map data. Using these pieces of data, the network prediction entity estimates the environment that the vehicle will be situated in (e.g. lane merging or tunnel) and that may affect the network environment in the future. Thereby, the network prediction entity can predict upcoming changes in the status of the wireless network and provide the prediction to the communication manager.

The prediction may be received by the access layer and then supplied to the communication manager.

Current and neighboring applications of UE(s) (ego vehicle or neighboring vehicles) may additionally be used to perform the network prediction.

The external entity may obtain information about current applications (including applications parameters/requirements) from every vehicle (e.g. on a regular base, once per second, or on demand when a new application is started). As the external entity receives the information from "all" vehicles, it also knows about the applications running on a neighboring vehicle (=neighboring applications).

The advantage of this version is the "birds eye view" on the network prediction based on many (or all) information sources in an area.

As for the remaining configuration and operation, the explanation made with respect to the first embodiment (see FIG. 7A) or the second embodiment apply (see FIG. 7B).

Although the present invention has been specifically described based on the various embodiments, the present invention is not limited to the above-described embodiments, and various changes may be made without departing from the scope thereof.

For example, the embodiments are described in connection with the ITS defined in the European standard ETSI EN 302 665.

However, the present invention can not only be applied to the ETSI standard but also to other standards having similar functions. For example, the concept realized in facilities layer can also be applied to "Message Sublayers" in the SAE standard (e.g. SAE J2735), "Application/Facility" or "Layer 7" in the ITS Forum standard (e.g. ARIB STD T109).

Furthermore, the present invention is applicable to a V2X communication apparatus having any configuration which comprises an application layer entity in which one or more applications may run and an entity for generating a V2X message.

Moreover, the present invention is applicable to any DCC architecture other than ETSI TS 103 175 using ITS-5G access technology.

## Claims

1. A V2X communication apparatus for transmitting a V2X message over a wireless network and implementing decentralized congestion control, DCC, comprising:
a communication unit for transmitting and receiving a V2X message;
an application layer entity on which one or more applications can run;
a checking unit for checking a current congestion state of the wireless network per channel;
a management layer entity for controlling the communication unit and the checking unit, and generating a first message generation ruleset based on at least the checked current congestion state; and
a message generation unit for generating a V2X message to be transmitted by the communication unit, in accordance with the generated first message generation ruleset,
wherein the management layer entity is configured to
obtain a prediction for the status of the wireless network for a point or period of time in the future,
obtain, based on the obtained network status prediction, a requirements profile of each of the one or more applications for the point or period of time in the future, and
generate a second message generation ruleset based on the obtained one or more requirements profiles in addition to the checked current congestion state, and
wherein the message generation unit is configured to generate a V2X message to be transmitted by the communication unit, in accordance with the generated second message generation ruleset.

2. The V2X communication apparatus according to claim 1,
wherein the application layer entity is configured to:
hold a current requirements profile of each of the one or more applications,
receive the predicted network status from the management layer entity,
generate an adjusted requirements profile of each application which is expected to run at the point of time or for the period of time, and
supply the adjusted one or more requirements profile to the management layer entity.

3. The V2X communication apparatus according to claim 1,
wherein the management layer entity is configured to:
hold a set of requirements profiles of each of the one or more applications, and
select a requirements profile, among the set of requirements profiles, of each of the one or more applications based on the predicted network status.

4. The V2X communication apparatus according to any one of claims 1 to 3, further comprising:
a prediction unit for predicting a network status of the wireless network for the point or period of time in the future, and supplying the predicted network status to the management layer entity.

5. The V2X communication apparatus according to any one of claims 1 to 4,
wherein the application layer entity, the message generation unit, and the management layer entity, and the checking unit are an application layer, a facilities layer, a management layer, and an access layer, respectively, defined in the ETSI EN 302 665 standard.

6. A system comprising
a vehicle equipped with a V2X communication apparatus according to claim 1, and
an entity located outside the vehicle for predicting a network status of the wireless network for the point or period of time in the future and supplying the predicted network status to the management layer entity of the V2X communication apparatus.

7. A decentralized congestion control, DCC, operation method of a V2X communication apparatus for transmitting a V2X message over a wireless network and comprising an application layer entity on which one or more applications can run, the method comprising:
checking a current congestion state of the wireless network per channel;
obtaining a prediction for the status of the wireless network for a point or period of time in the future;
obtaining, based on the obtained network status prediction, a requirements profile of each of the one or more applications for the point or period of time in the future;
generating a message generation ruleset based on the obtained one or more requirements profiles and the checked current congestion state; and
generating a V2X message to be transmitted in accordance with the generated message generation ruleset.
